# EUROPEAN PATENT SPECIFICATION

(11) **EP 2 630 442 B1**
(45) Date of publication and mention of the grant of the patent: **07.03.2018**
(21) Application number: 10774171.2
(22) Date of filing: 21.10.2010
(51) Int. Cl.: G01C 21/32, G01C 21/36

(54) **GEOGRAPHIC SWITCH FOR DIGITAL MAPS**
GEOGRAFISCHE UMSCHALTUNG FÜR DIGITALE KARTEN
COMMUTATEUR GÉOGRAPHIQUE POUR DES CARTES NUMÉRIQUES

(43) Date of publication of application: 28.08.2013
(73) Proprietor: TomTom Global Content B.V., 1011 AC Amsterdam (NL)
(72) Inventor: VERHEYDEN, Hans, B-9000 Gent (BE)
(74) Representative: Sariot, Eray
(86) International application number: PCT/EP2010/065896
(87) International publication number: WO 2012/052057

(56) References cited:
- US-A1- 2008 040 030

## Description

### BACKGROUND OF THE INVENTION

### Field of the Invention

This invention relates generally to a system and method for storing and distributing digital maps and geospatial data. More particularly, this invention relates to a method for incorporating construction data into digital maps and geospatial data.

### Related Art

Digital maps comprise a collection of data compiled and formatted into a virtual representation of land features, related objects and services as they exist in reality. The goal of most digital map providers is to produce maps that give accurate representations of a particular area, detailing major road arteries. Digital map technology enables a wide variety of applications, including navigation via GPS satellite network, as well as route planning and the calculation of distances from one point feature to another.

Digital maps are often composed of extremely large amounts of data in order to create rich, highly detailed content for the viewer. The data involved in these digital maps must be compiled, organized, and distributed to customers. The compilation and distribution of data takes time. The reality which is represented by the digital maps, however, is not static. At any given moment, road work and construction across a country is almost always underway. This construction can both temporarily and permanently alter location and/or direction of roads and junctions. These alterations may conflict with existing map data and therefore generate unsatisfactory results for navigation systems. In addition, new roadways may be finished that provide more desirable navigation routes that are not present in existing map data.

When a digital mapping system is released, many road construction projects will be in various stages of completion. Present navigation system developers are therefore presented with the decision of choosing between maps incorporating the pre-construction configuration and those that represent the roadway after construction is finished. Some application builders simply want roadways to be represented as they are on the date of the map release. Others may desire the future representation. Existing digital mapping systems fail to address the varied conditions and the varied approaches of application builders. US 2008/0040030 A1 discloses a map display system, in which newly added roads are highlighted according to map version number, and the highlighting is switched back to the usual display form after an elapsed time period.

It would be highly desirable to have a system and method of storing and distributing digital map and geospatial data that could accommodate both the changing nature of existing roadways under construction as well as the varied requirements of application builders developing navigation software.

It is an object of the present invention to provide a method of storing and distributing digital map and geospatial data that addresses the needs and requirements of developers with regard to existing roadways under construction.

### SUMMARY OF THE INVENTION AND ADVANTAGES

These and other objects and advantages are achieved according to the invention by a method of providing digital map information as defined in claim 1 and a navigation device as defined in claim 8.

The present invention provides advantages over known systems by allowing for a digital map to simultaneously store information relative to two different temporal periods. An advantage of this multi-temporal data storage is that it provides programmers and software the ability to switch or choose between the different information based on either preferences or based on known time periods. This can also the end user with the advantage of having the most accurate up to date digital map and direction information without necessitating updating their navigational device.

### BRIEF DESCRIPTION OF THE DRAWINGS

These and other features and advantages of the present invention will become more readily appreciated when considered in connection with the following detailed description and appended drawings, wherein:
Figure 1 is an illustration of a navigational device as contemplated by the present invention.
Figure 2 is an illustration of the map database in accordance with the present invention.
Figure 3 is a graphical illustration of a portion of the data in the database shown in Figure 2.

### DETAILED DESCRIPTION OF THE PREFERRED EMBODIMENT

Referring to the Figures, wherein like numerals indicate like or corresponding parts throughout the several views, this invention pertains to digital map information and to navigation equipment that utilizes such digital map information. By "digital map information", it is meant to include digital mapping systems for various established transportation networks, including various roadway surfaces for motorized and non-motorized vehicles, walking, biking, skiing and hiking trails, and other established routes along which users of navigations devices travel for business or pleasure. Although transportation networks are the most significant implementation of the present invention, the present invention would also work for bridges, buildings, and even general geographic areas. The present invention would be applicable to general geographic areas in examples where a forest is cut down and replaced by an industrialize area, or a water basin expands upon the construction of a dam. In this sense, the terms used to described the transportation network should be taken in their broadest sense. For example, the term "roadway" is intended to be used in a most general way and to be inclusive of all paved and unpaved roads, paths, trails and the like for use by any type of vehicle or a pedestrian.

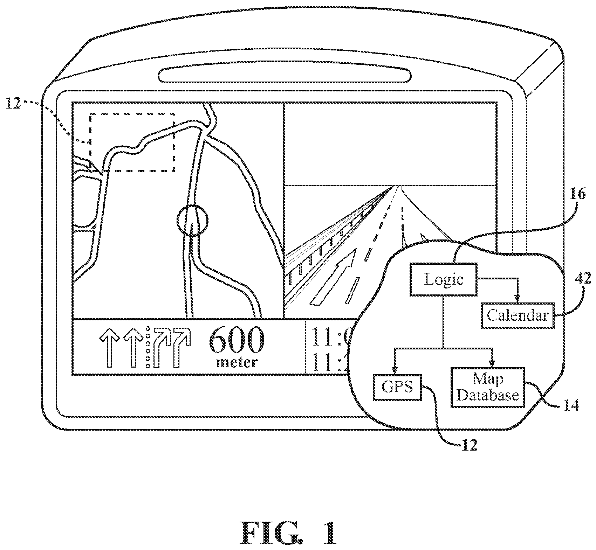

Referring now to Figure 1, which is a navigational device 10 in accordance with the present invention. Navigational devices 10 commonly utilize software 15 to pair geographic locating elements 12, such as global positioning systems, with a map database 14 such that a logic 16 may determine the location specific directions and mapping illustrations 18 can be provided. The term navigation devices 10 is intended to encompass a wide variety of systems including geographic information system applications. Although a wide variety of such systems are known, existing systems do not address the changing nature of transportation networks which are often in a constant state of change and flux due to changes in the infrastructure, additions to the infrastructure, or deletions from the infrastructure. Existing systems commonly utilize static released databases for their map databases 14 such that their details become fixed at the time of release.

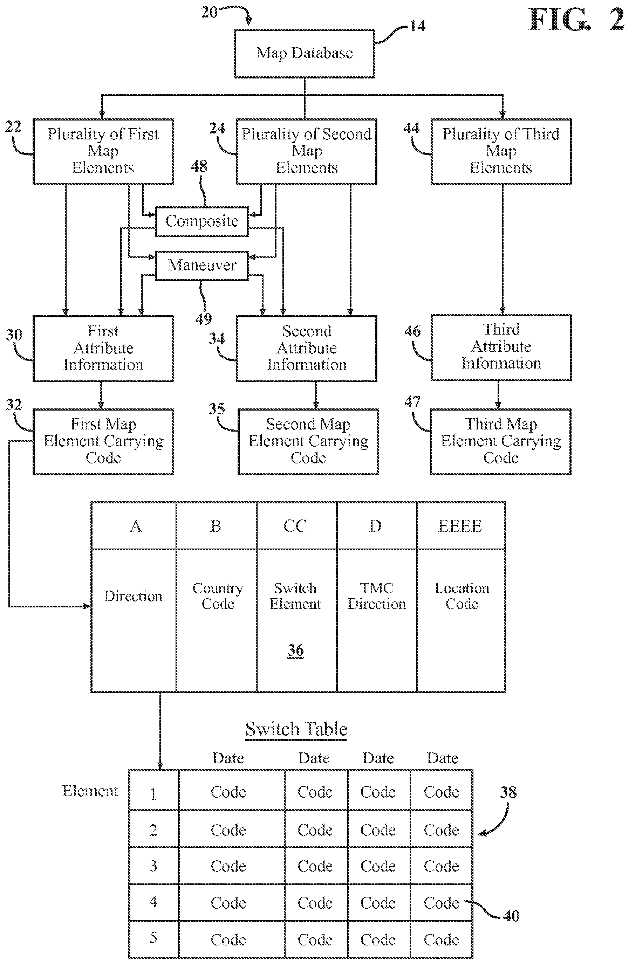

The present invention contemplates a more desirable and flexible method of providing digital map information 20 as illustrated in Figure 2. The present invention further contemplates that this usage may be sold to customers directly or may be incorporated in a navigation system as illustrated in Figure 1. The method includes providing a map database 14 comprised of a plurality of first map elements 22. These elements, such as planar graph elements or vector components, are utilized to define the digital map information 20 by way of smaller discrete sections. The map database 14 further includes a plurality of second map elements 24 which are intended to represent how the digital map information will change over a given period of time. It is contemplated that the first and second map elements 22,24 may comprise a wide variety of map features. These map features may incorporate a wide variety of digital map features and characteristics. Although the remaining description will refer to the "map" elements 22, 24 as "road" elements, it should be understood that this is for illustration purposes as road elements comprise a central basic element of digital maps.

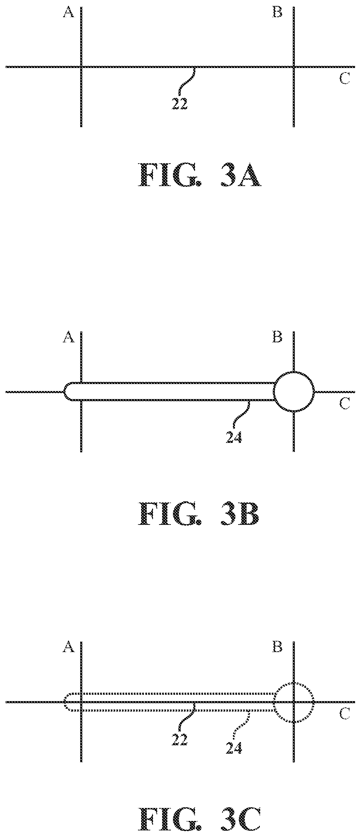

In one embodiment, it is contemplated that the first map (road) elements 22 represent existing map (road) elements 22 indicative of the state of the infrastructure at the time the map database 14 is released. The second map (road) elements 24 are contemplated to represent post-construction map (road) elements 24 indicative of the state of the infrastructure when modifications due to construction are completed. Thus the present invention combines existing roadways 26 (Figure 3a) and future roadways 28 (Figure 3b) into the same planar graph (Figure 3c). It should be understood that wherein post-construction map (road) elements 24 are known to be under construction where no existing road segments presently exist, these post-construction map elements 24 may exist independently of any existing map elements 22. It is preferred that each of the post-construction map elements 24 be paired to one of the existing map elements 22. This is meant to indicate that they relate to the same section of map or roadway such that they represent alternative configurations of the same element. In this fashion, only one of the two configurations is intended to be displayed at any given time.

The advantage of the present system is that it allows the database 14 to handle not only the existing state of roadways 22 but in addition how they will function when known construction projects are finished. The present invention accomplishes this by way of defining each of the plurality of existing map (road) elements 22 by first attribute information 30 (existing attribute information). The first attribute information 30 may be embedded into a first map element carrying code 32 in one embodiment. It is further contemplated that attribute information is intended to include a variety of details regarding a particular segment of map including, but not limited to, country code, geographic location, geometry, and operational condition (i.e. is the road open or closed; direction of travel, traffic flow pattern etc). It is understood that as the complexity of digital maps increases so will the variety of attributes intended to be encompassed by the stated attribute information.

The present invention further defines the plurality of second map (road) elements 24 by second attribute information 34 (post-construction attribute information). It is contemplated that this second attribute information 34 may be embedded into a second map element carrying code 35. It should be understood, however, that a wide variety of storage solutions would be obvious to one skilled in the art in light of the present disclosure. The first and second map element carrying codes 32, 35 may be combined into a single carrying code. In other embodiments, the attribute information 30,34 may be stored in independent databases are referenced by each element. The number of ways to store and retrieve the changing attribute information 30,34 are limitless and the present invention contemplates the utilization of any of these methodologies. The term carrying code is intended to encompass any embedding of attribute information into the data storage of the road elements 22,24. In one particular embodiment, the term element carrying code is intended to embody a data packet associated with a single road element.

It is further contemplated that the first and second map elements 22,24 and their respective attribute information 30,34 may be associated in a variety of fashions. In the aforementioned embodiment, the differential is stored within map element carrying codes 32,35. In other contemplated arrangements, the first and second map elements 22,24 may be assembled into composite element groupings 48 that may share first and second attribute information 30,34. For example, a group of map elements representing a bridge may be joined into a composite element such that a single first and second attribute information 30,34 may apply to each map element within the composite. Another alternative to associate map elements is to join groups of elements by relationships 49 (an example of relationship between map elements would be a maneuver). For example, a 'prohibited turn' could be a maneuver that relates to a particular map (road) element just before the intersection. In this example, all map elements related to a single intersection may be grouped to share attribute information 30,34. It is further contemplated that the relationships 49 themselves may be similarly be paired in pre-construction and post construction groupings.

It is contemplated that a switch setting 36 may utilized to indicate a preference between the usage of the first or second map elements 22,24. Although the switch setting 36 may be embodied by a variety of storage solutions, one embodiment contemplates that the switch setting 36 is embodied into the first and second road element carrying codes 32,35 such that navigational software or application developers may preferentially select either the first road elements 22 or the second road elements 24 to represent in their navigational directions. In this fashion, it is contemplated that the switch setting 36 controls which of the first or second map elements 22,24 is displayed. By prioritizing one of the map elements 22,24 the switch setting 36 allows software to select the desired element.

In one embodiment, it is contemplated that the switch setting 36 may utilize a switch table reference 38 that associates the switch setting 36 with a table of dates 40 reflective of when construction projects will be completed. In this fashion, navigation software can actively choose the switch setting 36 based on comparing the actual date from an internal or external calendar system 42 to the switch table reference 38. In addition, application developers may easily make permanent switch settings based on the release date of their particular products. In other embodiments, the switch setting 36 could be changed on the basis of wireless communications such that variations in construction schedules may be accommodated. Finally, it is also contemplated that feedback information, such as direction of travel and/or speed, sent wirelessly from navigational devices 10 within vehicles may be utilized to verify the construction timelines. In this fashion, if a road under construction is open during specific hours, the switch setting 36 may be wirelessly switched during those hours to notify drivers that the road is actually open.

It is further contemplated that the present invention could include a plurality of third map elements 44 defined by third attribute information 46 and that this third attribute information 46 may be embedded into a third map element carrying code 47. It is contemplated that the third discreet road elements 44 could be utilized to represent known future road construction projects. For example, a freeway might at release be fully functional but it is known that construction in a month will have it down to one lane in each direction. The switch setting 36 would be utilized to chose between the first, the second, and the third attribute information 30,34,46 based on a given date. Therefore, at release the first or existing attribute information 30 would be utilized. Upon the date of known construction, the third attribute information 46 would be utilized. Finally, when the date for finishing construction arrives the second attribute information 34 could be implemented. It is contemplated that further elements representing alternations based on calendar dating could also be added. In this fashion, a single elemental database can be released that is easily modifiable by either software or by application developers to accurately reflect transportational networks over an extended period of time.

The foregoing embodiments have been described in accordance with the relevant legal standards, thus the description is exemplary rather than limiting in nature. Variations and modifications to the disclosed embodiment may become apparent to those skilled in the art as long as they fall within the scope of the invention. Accordingly, the scope of legal protection afforded this invention can only be determined by studying the following claims.

## Claims

1. A method of providing digital map information (20) comprising:
providing a map database (14) comprising a plurality of first map elements (22) relating to a first temporal period, each of said plurality of first map elements (22) comprising first attribute information (30);
providing a plurality of second map elements (24) relating to a second different temporal period, each of said plurality of second map elements (24) comprising second attribute information (34), and each of said second map elements (24) being paired to one of said first map elements (22); and
allowing an alternate selection of said first map elements (22) or said second map elements (24) by providing a switch setting (36) controlling a choice between said first map elements (22) or said second map elements (24).

2. A method according to claim 1, wherein said first map elements (22) comprise existing map elements and said second map elements (24) comprise post-construction map elements.

3. A method according to any preceding claim, wherein said first attribute information (30) and said second attribute information (34) include one of either geographic location or operational condition respectively of the first and second map elements, wherein operational condition comprises at least one of direction of travel, traffic flow pattern, and information related to the map element being open or closed.

4. A method according to any preceding claim, wherein said first map elements (22) and said second map elements (24) comprise road elements.

5. A method according to any preceding claim, further comprising:
providing a plurality of third map elements (44) comprising third attribute information (46), said switch setting (36) indicating a preference for one of either said first map elements (22), said second map elements (24), or said third map elements (44).

6. A method according to claim 5, wherein said third map elements (44) comprise future scheduled construction map elements.

7. A method according to any preceding claim, wherein said switch setting (36) comprises a switch table reference (38), said switch table reference (38) indexing said choice to a calendar date.

8. A navigation device (20) comprising:
a map database (14) comprising:
a plurality of first map elements (22) relating to a first temporal period, each of said plurality of first map elements (22) comprising first attribute information (30);
a plurality of second map elements (24) relating to a second different temporal period , each of said plurality of second map elements (24) comprising second attribute information (34), and each of said second map elements (24) being paired to one of said first map elements (22); and
a switch setting (36) arranged to control a choice between said first map elements (22) or said second map elements (24); and
navigation software (15) paired with a geographic locating element (12) capable of displaying portions of said map database (18), said navigation software (15) including logic (16) configured to display either said first map elements (22) or said second map elements (24) in response to said switch setting (36).

9. A navigation device (10) according to claim 8, wherein said switch setting (36) comprises:
a switch table (38) associating said choice with a calendar date.

10. A navigation device (10) according to claim 8 or 9, further comprising:
an internal calendar element (42) in communication with said logic (16), said logic (16) utilizing said switch table (38) and said internal calendar element (42) to determine said choice.

11. A navigation device (10) according to any of claims 8 to 10, wherein said switch setting (36) is altered by wireless communication.

12. A navigation device (10) according to any of claims 8 to 11, wherein said first attribute information (30) and said second attribute information (34) include one of either geographic location or operational condition respectively of the first and second map elements, wherein operational condition comprises at least one of direction of travel, traffic flow pattern, and information related to the map element being open or closed.

## Patentansprüche

1. Verfahren zum Bereitstellen von digitalen Karteninformationen (20), das Folgendes beinhaltet:
Bereitstellen einer Kartendatenbank (14), die eine Mehrzahl von ersten Kartenelementen (22) in Bezug auf einen ersten Zeitraum umfasst, wobei jedes aus der genannten Mehrzahl von ersten Kartenelementen (22) erste Attributinformationen (30) umfasst;
Bereitstellen einer zweiten Mehrzahl von zweiten Kartenelementen (24) in Bezug auf einen zweiten, unterschiedlichen Zeitraum, wobei jedes aus der genannten Mehrzahl von zweiten Kartenelementen (24) zweite Attributinformationen (34) umfasst und wobei jedes der genannten zweiten Kartenelemente (24) mit einem der genannten ersten Kartenelemente (22) gepaart wird; und
Zulassen einer alternativen Auswahl der genannten ersten Kartenelemente (22) oder der genannten zweiten Kartenelemente (24) durch Bereitstellen einer Schaltereinstellung (36), die eine Wahl zwischen den genannten ersten Kartenelementen (22) und den genannten zweiten Kartenelementen (24) steuert.

2. Verfahren nach Anspruch 1, wobei die genannten ersten Kartenelemente (22) existierende Kartenelemente umfassen und die genannten zweiten Kartenelemente (24) Nach-Bauarbeitskartenelemente umfassen.

3. Verfahren nach einem vorherigen Anspruch, wobei die genannten ersten Attributinformationen (30) und die genannten zweiten Attributinformationen (34) geographische Orte oder Betriebsbedingungen jeweils der ersten und zweiten Kartenelemente beinhalten, wobei die Betriebsbedingung wenigstens eines aus Fahrtrichtung, Verkehrsflussmuster und Informationen darüber umfasst, ob das Kartenelement offen oder geschlossen ist.

4. Verfahren nach einem vorherigen Anspruch, wobei die genannten ersten Kartenelemente (22) und die genannten zweiten Kartenelemente (24) Straßenelemente umfassen.

5. Verfahren nach einem vorherigen Anspruch, das ferner Folgendes beinhaltet:
Bereitstellen einer Mehrzahl von dritten Kartenelementen (44), die dritte Attributinformationen (46) umfassen, wobei die genannte Schaltereinstellung (36) eine Präferenz für eines aus den genannten ersten Kartenelementen (22), den genannten zweiten Kartenelementen (24) und den genannten dritten Kartenelementen (44) anzeigt.

6. Verfahren nach Anspruch 5, wobei die genannten dritten Kartenelemente (44) Kartenelemente für zukünftige geplante Bauarbeiten umfassen.

7. Verfahren nach einem vorherigen Anspruch, wobei die genannte Schaltereinstellung (36) eine Schalttabellenreferenz (38) umfasst, wobei die genannte Schalttabellenreferenz (38) die genannte Wahl auf ein Kalenderdatum indexiert.

8. Navigationsgerät (20), das Folgendes umfasst:
eine Kartendatenbank (40), die Folgendes umfasst:
eine Mehrzahl von ersten Kartenelementen (22) in Bezug auf einen ersten Zeitraum, wobei jedes aus der genannten Mehrzahl von ersten Kartenelementen (22) erste Attributinformationen (30) umfasst;
eine Mehrzahl von zweiten Kartenelementen (24) in Bezug auf einen zweiten, unterschiedlichen Zeitraum, wobei jedes aus der genannten Mehrzahl von zweiten Kartenelementen (24) zweite Attributinformationen (34) umfasst und wobei jedes der genannten zweiten Kartenelemente (24) mit einem der genannten ersten Kartenelemente (22) gepaart ist; und
eine Schaltereinstellung (36), ausgelegt zum Steuern einer Wahl zwischen den genannten ersten Kartenelementen (22) und den genannten zweiten Kartenelementen (24); und
Navigationssoftware (15), die mit einem geographischen Ortungselement (12) gepaart ist, das Teile der genannten Kartendatenbank (18) anzeigen kann, wobei die genannte Navigationssoftware (15) Logik (16) beinhaltet, konfiguriert zum Anzeigen entweder der genannten ersten Kartenelemente (22) oder der genannten zweiten Kartenelemente (24) als Reaktion auf die genannte Schaltereinstellung (36).

9. Navigationsgerät (10) nach Anspruch 8, wobei die genannte Schaltereinstellung (36) Folgendes umfasst:
eine Schalttabelle (38), die die genannte Wahl mit einem Kalenderdatum assoziiert.

10. Navigationsgerät (10) nach Anspruch 8 oder 9, das ferner Folgendes umfasst:
ein internes Kalenderelement (42) in Kommunikation mit der genannten Logik (16), wobei die genannte Logik (16) die genannte Schalttabelle (38) und das genannte interne Kalenderelement (42) zum Bestimmen der genannten Wahl nutzt.

11. Navigationsgerät (10) nach einem der Ansprüche 8 bis 10, wobei die genannte Schaltereinstellung (36) durch drahtlose Kommunikation verändert wird.

12. Navigationsgerät (10) nach einem der Ansprüche 8 bis 11, wobei die genannten ersten Attributinformationen (30) und die genannten zweiten Attributinformationen (34) geographische Orte bzw. Betriebsbedingungen der ersten und der zweiten Kartenelemente beinhalten, wobei die Betriebsbedingungen wenigstens eines aus Fahrtrichtung, Verkehrsflussmuster und Informationen in Bezug darauf umfassen, ob das Kartenelemente offen oder geschlossen ist.

## Revendications

1. Procédé permettant de fournir des informations cartographiques numériques (20) comprenant les opérations consistant à :
fournir une base de données cartographiques (14) comprenant une pluralité de premiers éléments cartographiques (22) relatifs à une première période temporelle, chaque élément de ladite pluralité de premiers éléments cartographiques (22) comprenant des premières informations d'attribut (30) ;
fournir une pluralité de deuxièmes éléments cartographiques (24) relatifs à une deuxième période temporelle qui est différente, chaque élément de ladite pluralité de deuxièmes éléments cartographiques (24) comprenant des deuxièmes informations d'attribut (34), et chacun desdits deuxièmes éléments cartographiques (24) étant apparié à l'un desdits premiers éléments cartographiques (22) ; et
permettre une sélection alternante desdits premiers éléments cartographiques (22) ou desdits deuxièmes éléments cartographiques (24) grâce à la fourniture d'un réglage de commutateur (36) lequel contrôle un choix entre lesdits premiers éléments cartographiques (22) ou lesdits deuxièmes éléments cartographiques (24).

2. Procédé selon la revendication 1, lesdits premiers éléments cartographiques (22) comprenant des éléments cartographiques existants et lesdits deuxièmes éléments cartographiques (24) comprenant des éléments cartographiques de post-construction.

3. Procédé selon une quelconque revendication précédente, lesdites premières informations d'attribut (30) et lesdites deuxièmes informations d'attribut (34) incluant l'un parmi soit une localisation géographique, soit un état opérationnel respectivement des premiers et deuxièmes éléments cartographiques, cas dans lequel un état opérationnel comprend au moins un parmi un sens de déplacement, un schéma de flux de circulation, et des informations relatives à l'élément cartographique qui est ouvert ou fermé.

4. Procédé selon une quelconque revendication précédente, lesdits premiers éléments cartographiques (22) et lesdits deuxièmes éléments cartographiques (24) comprenant des éléments routiers.

5. Procédé selon une quelconque revendication précédente, comprenant en outre l'opération consistant à :
fournir une pluralité de troisièmes éléments cartographiques (44) comprenant des troisièmes informations d'attribut (46), ledit réglage de commutateur (36) indiquant une préférence pour un parmi soit lesdits premiers éléments cartographiques (22), soit lesdits deuxièmes éléments cartographiques (24), soit lesdits troisièmes éléments cartographiques (44).

6. Procédé selon la revendication 5, lesdits troisièmes éléments cartographiques (44) comprenant des éléments cartographiques de construction planifiés pour l'avenir.

7. Procédé selon une quelconque revendication précédente, ledit réglage de commutateur (36) comprenant une référence de table de commutateur (38), ladite référence de table de commutateur (38) indexant ledit choix à une date calendaire.

8. Dispositif de navigation (20) comprenant :
une base de données cartographiques (14) comprenant :
une pluralité de premiers éléments cartographiques (22) relatifs à une première période temporelle, chaque élément de ladite pluralité de premiers éléments cartographiques (22) comprenant des premières informations d'attribut (30) ;
une pluralité de deuxièmes éléments cartographiques (24) relatifs à une deuxième période temporelle qui est différente, chaque élément de ladite pluralité de deuxièmes éléments cartographiques (24) comprenant des deuxièmes informations d'attribut (34), et chacun desdits deuxièmes éléments cartographiques (24) étant apparié à l'un desdits premiers éléments cartographiques (22) ; et
un réglage de commutateur (36) agencé de façon à contrôler un choix entre lesdits premiers éléments cartographiques (22) ou lesdits deuxièmes éléments cartographiques (24) ; et
un logiciel de navigation (15) apparié à un élément de localisation géographique (12) apte à afficher des portions de ladite base de données cartographiques (18), ledit logiciel de navigation (15) incluant une logique (16) configurée de façon à afficher soit lesdits premiers éléments cartographiques (22), soit lesdits deuxièmes éléments cartographiques (24) en réaction audit réglage de commutateur (36).

9. Dispositif de navigation (10) selon la revendication 8, ledit réglage de commutateur (36) comprenant :
une table de commutateur (38) associant ledit choix à une date calendaire.

10. Dispositif de navigation (10) selon la revendication 8 ou 9, comprenant en outre :
un élément calendaire interne (42) en communication avec ladite logique (16), ladite logique (16) utilisant ladite table de commutateur (38) et ledit élément calendaire interne (42) pour déterminer ledit choix.

11. Dispositif de navigation (10) selon l'une quelconque des revendications 8 à 10, ledit réglage de commutateur (36) étant modifié par une communication sans fil.

12. Dispositif de navigation (10) selon l'une quelconque des revendications 8 à 11, lesdites premières informations d'attribut (30) et lesdites deuxièmes informations d'attribut (34) incluant l'un parmi soit une localisation géographique, soit un état opérationnel respectivement des premiers et deuxièmes éléments cartographiques, cas dans lequel un état opérationnel comprend au moins un parmi un sens de déplacement, un schéma de flux de circulation, et des informations relatives à l'élément cartographique qui est ouvert ou fermé.
